# EUROPEAN PATENT APPLICATION

(11) **EP 4 604 046 A1**
(43) Date of publication of application: **20.08.2025**
(21) Application number: 23877291.7
(22) Date of filing: 11.10.2023
(51) Int. Cl.: G06Q 50/12

(54) **ROOM-CHARGE SYSTEM**

(30) Priority: 12.10.2022 JP 2022163770
(71) Applicant: Kotozna, Inc., Tokyo 107-0051 (JP)
(72) Inventor: GOTO Genri, Tokyo 107-0052 (JP)
(74) Representative: Eisenführ Speiser
(86) International application number: PCT/JP2023/036820
(87) International publication number: WO 2024/080288

(57) **Abstract**

A charging-to-room system (1) includes: a card key issuance unit (5) that issues a card key to a room of an accommodation facility where a user stays, based on accommodation plan information on the user acquired from an accommodation reservation management system (2); a two-dimensional code assignment unit (6) that assigns the card key a two-dimensional code in which identification information on the accommodation facility and an accommodation reservation number included in the accommodation plan information are coded; and a charging-to-room processing unit (7) that performs a charging-to-room process for charging, through use of the two-dimensional code on the card key, payment of a price for a product purchased by the user, or payment of a fee for a service used by the user, to the room where the user stays.

## Description

### Technical Field

The present invention relates to a charging-to-room system using a card key to a room of an accommodation facility.

### Background Art

Conventionally, there have been proposed services that use a card key (room key) to a room of an accommodation facility. For example, in a service that allows a guest to use a rental personal computer and the like disposed in a business room of a hotel, a system has been proposed that uses a room key code to protect information (for example, see Patent Literature 1).

However, conventionally, there has never been proposed a system for charging, through use of a card key to a room of an accommodation facility, payment of a price for a product purchased by a user (guest) of the accommodation facility, or payment of a fee for a service used by the user, to the room where the user stays.

### Citation List

### Patent Literature

Patent Literature 1: Japanese Patent Laid-Open No. 2003-141273 (pages 5 to 7, Figure 1)

### Summary of Invention

### Technical Problem

The present invention has been made under such background. An object of the present invention is to provide a charging-to-room system that enables, through use of a card key to a room of an accommodation facility, payment of a price for a product purchased by a user of the accommodation facility, or payment of a fee for a service used by the user, to be charged to the room where the user stays.

### Solution to Problem

An aspect of the present invention is a charging-to-room system. The charging-to-room system includes: a card key issuance unit that issues a card key to a room of an accommodation facility where a user stays, based on accommodation plan information on the user acquired from an accommodation reservation management system; a two-dimensional code assignment unit that assigns the card key a two-dimensional code in which identification information on the accommodation facility and an accommodation reservation number included in the accommodation plan information are coded; and a charging-to-room processing unit that performs a charging-to-room process for charging, through use of the two-dimensional code on the card key, payment of a price for a product purchased by the user, or payment of a fee for a service used by the user, to the room where the user stays, wherein the charging-to-room processing unit includes: a charging-to-room request reception section that, when a shop terminal installed in a shop that sells the product or a shop that provides the service is set in a charging-to-room mode, and when the two-dimensional code on the card key is scanned with the shop terminal, receives a charging-to-room request from the shop terminal, the charging-to-room request including the identification information on the accommodation facility and the accommodation reservation number coded in the two-dimensional code; an amount-of-money input request section that sends, to the shop terminal as a response to the charging-to-room request, an amount-of-money input request requesting that an amount of money corresponding to the price for the product or the fee for the service be inputted; an amount-of-money information reception section that receives from the shop terminal, as a response to the amount-of-money input request, amount-of-money information on the price for the product or the fee for the service inputted by staff of the shop through use of the shop terminal; a room number input request section that sends to the shop terminal a room number input request requesting that a room number of the room where the user stays be inputted; a room number reception section that receives from the shop terminal, as a response to the room number input, the room number of the room where the user stays inputted by the user through use of the shop terminal; a charging-to-room permission determination section that determines whether or not charging to the room where the user stays is possible, by checking the room number received from the shop terminal against a room number of the user acquired from the accommodation reservation management system based on the identification information on the accommodation facility and the accommodation reservation number coded in the two-dimensional code; and a charging-to-room permission section that, when it is determined that charging to the room is possible, permits the price for the product purchased by the user or the fee for the service used by the user to be charged to the room where the user stays.

Another aspect of the present invention is a method executed by a charging-to-room system. In the method, the charging-to-room system includes: a card key issuance unit that issues a card key to a room of an accommodation facility where a user stays, based on accommodation plan information on the user acquired from an accommodation reservation management system; a two-dimensional code assignment unit that assigns the card key a two-dimensional code in which identification information on the accommodation facility and an accommodation reservation number included in the accommodation plan information are coded; and a charging-to-room processing unit that performs a charging-to-room process for charging, through use of the two-dimensional code on the card key, payment of a price for a product purchased by the user, or payment of a fee for a service used by the user, to the room where the user stays, and the method includes: when the two-dimensional code on the card key is scanned with a shop terminal installed in a shop that sells the product or a shop that provides the service when the shop terminal is set in a charging-to-room mode, receiving a charging-to-room request from the shop terminal, the charging-to-room request including the identification information on the accommodation facility and the accommodation reservation number coded in the two-dimensional code; sending, to the shop terminal as a response to the charging-to-room request, an amount-of-money input request requesting that an amount of money corresponding to the price for the product or the fee for the service be inputted; receiving from the shop terminal, as a response to the amount-of-money input request, amount-of-money information on the price for the product or the fee for the service inputted by staff of the shop through use of the shop terminal; sending to the shop terminal a room number input request requesting that a room number of the room where the user stays be inputted; receiving from the shop terminal, as a response to the room number input, the room number of the room where the user stays inputted by the user through use of the shop terminal; determining whether or not charging to the room where the user stays is possible, by checking the room number received from the shop terminal against a room number of the user acquired from the accommodation reservation management system based on the identification information on the accommodation facility and the accommodation reservation number coded in the two-dimensional code; and when it is determined that charging to the room is possible, permitting the price for the product purchased by the user or the fee for the service used by the user to be charged to the room where the user stays.

The present invention includes other aspects as described hereinbelow. Accordingly, the disclosure of the invention is intended to provide some aspects of the present invention, and is not intended to limit the scope of the invention described and claimed herein.

### Brief Description of Drawings

[Figure 1] Figure 1 is a block diagram showing a configuration of a charging-to-room system in an embodiment of the present invention.
[Figure 2] Figure 2 is a block diagram showing a configuration of a guest service system in the embodiment of the present invention.
[Figure 3] Figure 3 is a flowchart that describes operation (card key issuance) of the charging-to-room system in the embodiment of the present invention.
[Figure 4] Figure 4 is a flowchart that describes operation (card key issuance) of the charging-to-room system in the embodiment of the present invention.
[Figure 5] Figure 5 is a flowchart that describes operation (card key issuance) of the charging-to-room system in the embodiment of the present invention.
[Figure 6] Figure 6 is a flowchart that describes operation (charging-to-room through use of a shop terminal) of the charging-to-room system in the embodiment of the present invention.
[Figure 7] Figure 7 is a flowchart that describes operation (coupon use through use of a shop terminal) of the charging-to-room system in the embodiment of the present invention.
[Figure 8] Figure 8 is a flowchart that describes operation (charging-to-room through use of a user terminal in a case where a QR code on the card key is scanned first) of the charging-to-room system in the embodiment of the present invention.
[Figure 9] Figure 9 is a flowchart that describes operation (coupon use through use of the user terminal in a case where the QR code on the card key is scanned first) of the charging-to-room system in the embodiment of the present invention.
[Figure 10] Figure 10 is a flowchart that describes operation (charging-to-room through use of the user terminal in a case where a QR code in a shop is scanned first) of the charging-to-room system in the embodiment of the present invention.
[Figure 11] Figure 11 is a flowchart that describes operation (coupon use through use of the user terminal in a case where a QR code in a shop is scanned first) of the charging-to-room system in the embodiment of the present invention.
[Figure 12] Figure 12 is a flowchart that describes operation (card key issuance) of the charging-to-room system in the embodiment of the present invention.

### Description of Embodiments

A detailed description of the present invention is given below. However, the detailed description below and the accompanying drawings are not intended to limit the invention.

A charging-to-room system of the present invention includes: a card key issuance unit that issues a card key to a room of an accommodation facility where a user stays, based on accommodation plan information on the user acquired from an accommodation reservation management system; a two-dimensional code assignment unit that assigns the card key a two-dimensional code in which identification information on the accommodation facility and an accommodation reservation number included in the accommodation plan information are coded; and a charging-to-room processing unit that performs a charging-to-room process for charging, through use of the two-dimensional code on the card key, payment of a price for a product purchased by the user, or payment of a fee for a service used by the user, to the room where the user stays, wherein the charging-to-room processing unit includes: a charging-to-room request reception section that, when a shop terminal installed in a shop that sells the product or a shop that provides the service is set in a charging-to-room mode, and when the two-dimensional code on the card key is scanned with the shop terminal, receives a charging-to-room request from the shop terminal, the charging-to-room request including the identification information on the accommodation facility and the accommodation reservation number coded in the two-dimensional code; an amount-of-money input request section that sends, to the shop terminal as a response to the charging-to-room request, an amount-of-money input request requesting that an amount of money corresponding to the price for the product or the fee for the service be inputted; an amount-of-money information reception section that receives from the shop terminal, as a response to the amount-of-money input request, amount-of-money information on the price for the product or the fee for the service inputted by staff of the shop through use of the shop terminal; a room number input request section that sends to the shop terminal a room number input request requesting that a room number of the room where the user stays be inputted; a room number reception section that receives from the shop terminal, as a response to the room number input, the room number of the room where the user stays inputted by the user through use of the shop terminal; a charging-to-room permission determination section that determines whether or not charging to the room where the user stays is possible, by checking the room number received from the shop terminal against a room number of the user acquired from the accommodation reservation management system based on the identification information on the accommodation facility and the accommodation reservation number coded in the two-dimensional code; and a charging-to-room permission section that, when it is determined that charging to the room is possible, permits the price for the product purchased by the user or the fee for the service used by the user to be charged to the room where the user stays.

According to such a configuration, through use of the two-dimensional code assigned to the card key to the room of the accommodation facility where the user stays, payment of the price for the product purchased by the user, or payment of the fee for the service used by the user, can be charged to the room where the user stays. In the present case, when the shop terminal is set in the charging-to-room mode, and when the two-dimensional code on the card key is scanned with the shop terminal, upon reception of the charging-to-room request from the shop terminal, the amount-of-money input request is sent to the shop terminal, and as a response thereto, the amount-of-money information is received from the shop terminal. Moreover, the room number input request is sent to the shop terminal, and as a response thereto, the room number of the room where the user stays is received from the shop terminal. Then, it is determined whether or not charging to the room where the user stays is possible, by checking the room number received from the shop terminal against the room number of the user acquired from the accommodation reservation management system based on the identification information on the accommodation facility and the accommodation reservation number coded in the two-dimensional code.

In the charging-to-room system of the present invention, the accommodation reservation number may be associated with information related to a coupon that the user is able to use in a coupon management system, and the charging-to-room system may further include a coupon use processing unit that performs a coupon use process for allowing the user to use the coupon through use of the two-dimensional code on the card key, wherein the coupon use processing unit may include: a coupon use request reception section that, when a shop terminal installed in a shop where the user desires to use the coupon is set in a coupon use mode, and when the two-dimensional code on the card key is scanned with the shop terminal, receives a coupon use request from the shop terminal, the coupon use request including the identification information on the accommodation facility and the accommodation reservation number coded in the two-dimensional code; a coupon use permission determination section that determines whether or not it is possible to use the coupon of the user at the shop, by referencing the coupon management system based on the identification information on the accommodation facility and the accommodation reservation number coded in the two-dimensional code; and a determination result notification section that notifies the shop terminal, as a response to the coupon use request, of a result of the determination of whether or not it is possible to use the coupon of the user at the shop.

According to such a configuration, the user can use the coupon through use of the two-dimensional code assigned to the card key to the room of the accommodation facility where the user stays. In the present case, when the shop terminal is set in the coupon use mode, and when the two-dimensional code on the card key is scanned with the shop terminal, upon reception of the coupon use request from the shop terminal, it is determined whether or not it is possible to use the coupon of the user at the shop, by referencing the coupon management system based on the identification information on the accommodation facility and the accommodation reservation number coded in the two-dimensional code.

In the charging-to-room system of the present invention, access information for the user to access a guest service system may be coded in the two-dimensional code, and the two-dimensional code assignment unit may perform: when staff of the accommodation facility inputs the room number of the user through use of an accommodation facility terminal installed in the accommodation facility, a process of acquiring the identification information on the accommodation facility and the accommodation reservation number of the user from the accommodation reservation management system; a process of acquiring the access information for the user from the guest service system, based on the identification information on the accommodation facility and the accommodation reservation number acquired from the accommodation reservation management system; and a process of assigning the identification information on the accommodation facility and the accommodation reservation number acquired from the accommodation reservation management system and the access information acquired from the guest service system to the card key.

According to such a configuration, when the room number of the user is inputted through use of the accommodation facility terminal, the identification information on the accommodation facility and the accommodation reservation number of the user can be acquired from the accommodation reservation management system, and based on the identification information on the accommodation facility and the accommodation reservation number, the access information for the user can be acquired from the guest service system. Thus, the two-dimensional code in which the access information for the user to access the guest service system is coded can be assigned to the card key in three steps.

In the charging-to-room system of the present invention, access information for the user to access a guest service system may be coded in the two-dimensional code, and the two-dimensional code assignment unit may perform: a process of acquiring the identification information on the accommodation facility and the accommodation reservation number included in the accommodation plan information from the accommodation reservation management system; a process of acquiring the access information for the user from the guest service system, based on the identification information on the accommodation facility and the accommodation reservation number included in the accommodation plan information; and a process of assigning the identification information on the accommodation facility and the accommodation reservation number acquired from the accommodation reservation management system and the access information acquired from the guest service system to the card key.

According to such a configuration, the identification information on the accommodation facility and the accommodation reservation number included in the accommodation plan information can be acquired from the accommodation reservation management system, and based on the identification information on the accommodation facility and the accommodation reservation number, the access information for the user can be acquired from the guest service system. Thus, the two-dimensional code in which the access information for the user to access the guest service system is coded can be assigned to the card key in two steps.

In the charging-to-room system of the present invention, access information for the user to access a guest service system may be coded in the two-dimensional code, the two-dimensional code assignment unit may be unified with the card key issuance unit, and the card key issuance unit may perform: a process of acquiring the identification information on the accommodation facility and the accommodation reservation number included in the accommodation plan information from the accommodation reservation management system; a process of acquiring the access information for the user from the guest service system, based on the identification information on the accommodation facility and the accommodation reservation number included in the accommodation plan information; and a process of, when issuing the card key of the user based on the accommodation plan information on the user acquired from the accommodation reservation management system, assigning the identification information on the accommodation facility and the accommodation reservation number acquired from the accommodation reservation management system and the access information acquired from the guest service system to the card key.

According to such a configuration, the identification information on the accommodation facility and the accommodation reservation number included in the accommodation plan information can be acquired from the accommodation reservation management system, and based on the identification information on the accommodation facility and the accommodation reservation number, the access information for the user can be acquired from the guest service system. In the present case, since the two-dimensional code assignment unit is unified with the card key issuance unit, the identification information on the accommodation facility and the accommodation reservation number acquired from the accommodation reservation management system and the access information acquired from the guest service system can be assigned to the card key when the card key of the user is issued. Thus, the two-dimensional code in which the access information for the user to access the guest service system is coded can be assigned to the card key in one step.

In the charging-to-room system of the present invention, access information for the user to access a guest service system may be coded in the two-dimensional code, the two-dimensional code assignment unit may be unified with the card key issuance unit, and the card key issuance unit may perform: a process of acquiring the access information for the user from the guest service system; a process of acquiring the identification information on the accommodation facility and the accommodation reservation number included in the accommodation plan information from the accommodation reservation management system; and a process of, when issuing the card key of the user, assigning the identification information on the accommodation facility and the accommodation reservation number acquired from the accommodation reservation management system and the access information acquired from the guest service system to the card key.

According to such a configuration, the access information for the user can be acquired from the guest service system, and the identification information on the accommodation facility and the accommodation reservation number included in the accommodation plan information can be acquired from the accommodation reservation management system. In the present case, since the two-dimensional code assignment unit is unified with the card key issuance unit, the identification information on the accommodation facility and the accommodation reservation number acquired from the accommodation reservation management system and the access information acquired from the guest service system can be assigned to the card key when the card key of the user is issued. Thus, the two-dimensional code in which the access information for the user to access the guest service system is coded can be assigned to the card key in two steps.

In the charging-to-room system of the present invention, access information for the user to access a guest service system may be coded in the two-dimensional code, a second two-dimensional code in which identification information on the shop is coded may be provided in the shop, and the guest service system may include: a user authentication section that, when the two-dimensional code is scanned with a user terminal owned by the user, accepts access from the user terminal based on the access information coded in the two-dimensional code, and performs an authentication process for the user based on the identification information on the accommodation facility and the accommodation reservation number coded in the two-dimensional code; a scan request section that, when the authentication process for the user succeeds, sends to the user terminal a scan request that causes the second two-dimensional code in the shop to be scanned; a guest service permission determination section that, when the second two-dimensional code is scanned with the user terminal, determines, based on the identification information on the shop coded in the second two-dimensional code, whether or not it is possible to charge payment of the price for the product purchased by the user at the shop, or payment of the fee for the service used by the user at the shop, to the room where the user stays, or whether or not it is possible to use a coupon at the shop; and a determination result notification section that notifies a result of the determination by the guest service permission determination section to the user terminal.

According to such a configuration, when the two-dimensional code on the card key of the user is scanned with the user terminal, the authentication process for the user is performed by using the identification information on the accommodation facility and the reservation number coded in the two-dimensional code, and when the authentication process for the user succeeds, the scan request that causes the second two-dimensional code in the shop to be scanned is sent to the user terminal. When the second two-dimensional code in the shop is scanned with the user terminal, it is determined, based on the identification information on the shop coded in the second two-dimensional code, whether or not it is possible to charge payment of the price for the product purchased by the user at the shop, or payment of the fee for the service used by the user at the shop, to the room where the user stays, or whether or not it is possible to use the coupon at the shop. Thus, payment of the price for the product purchased by the user or payment of the fee for the service used by the user can be charged to the room where the user stays.

In the charging-to-room system of the present invention, a second two-dimensional code in which identification information on the shop and second access information for the user to access a second guest service system are coded may be provided in the shop, and the second guest service system may include: a shop authentication section that, when the second two-dimensional code is scanned with a user terminal owned by the user, accepts access from the user terminal based on the second access information coded in the second two-dimensional code, and performs an authentication process for the shop based on the identification information on the shop coded in the second two-dimensional code; a scan request section that, when the authentication process for the shop succeeds, sends to the user terminal a scan request that causes the two-dimensional code on the card key of the user to be scanned; a guest service permission determination section that, when the two-dimensional code is scanned with the user terminal, determines, based on the identification information on the accommodation facility and the accommodation reservation number coded in the two-dimensional code, whether or not it is possible to charge payment of the price for the product purchased by the user at the shop, or payment of the fee for the service used by the user at the shop, to the room where the user stays, or whether or not it is possible to use a coupon at the shop; and a determination result notification section that notifies a result of the determination by the guest service permission determination section to the user terminal.

According to such a configuration, when the second two-dimensional code in the shop is scanned with the user terminal, the authentication process for the shop is performed based on the identification information on the shop coded in the second two-dimensional code, and when the authentication process for the shop succeeds, the scan request that causes the two-dimensional code on the card key of the user to be scanned is sent to the user terminal. When the two-dimensional code on the card key of the user is scanned with the user terminal, it is determined, based on the identification information on the accommodation facility and the reservation number coded in the two-dimensional code, whether or not it is possible to charge payment of the price for the product purchased by the user at the shop, or payment of the fee for the service used by the user at the shop, to the room where the user stays, or whether or not it is possible to use the coupon at the shop. Thus, payment of the price for the product purchased by the user or payment of the fee for the service used by the user can be charged to the room where the user stays.

A method of the present invention is a method executed by a charging-to-room system, the charging-to-room system including: a card key issuance unit that issues a card key to a room of an accommodation facility where a user stays, based on accommodation plan information on the user acquired from an accommodation reservation management system; a two-dimensional code assignment unit that assigns the card key a two-dimensional code in which identification information on the accommodation facility and an accommodation reservation number included in the accommodation plan information are coded; and a charging-to-room processing unit that performs a charging-to-room process for charging, through use of the two-dimensional code on the card key, payment of a price for a product purchased by the user, or payment of a fee for a service used by the user, to the room where the user stays, and the method includes: when the two-dimensional code on the card key is scanned with a shop terminal installed in a shop that sells the product or a shop that provides the service when the shop terminal is set in a charging-to-room mode, receiving a charging-to-room request from the shop terminal, the charging-to-room request including the identification information on the accommodation facility and the accommodation reservation number coded in the two-dimensional code; sending, to the shop terminal as a response to the charging-to-room request, an amount-of-money input request requesting that an amount of money corresponding to the price for the product or the fee for the service be inputted; receiving from the shop terminal, as a response to the amount-of-money input request, amount-of-money information on the price for the product or the fee for the service inputted by staff of the shop through use of the shop terminal; sending to the shop terminal a room number input request requesting that a room number of the room where the user stays be inputted; receiving from the shop terminal, as a response to the room number input, the room number of the room where the user stays inputted by the user through use of the shop terminal; determining whether or not charging to the room where the user stays is possible, by checking the room number received from the shop terminal against a room number of the user acquired from the accommodation reservation management system based on the identification information on the accommodation facility and the accommodation reservation number coded in the two-dimensional code; and when it is determined that charging to the room is possible, permitting the price for the product purchased by the user or the fee for the service used by the user to be charged to the room where the user stays.

According to the method as well, as in the system, through use of the two-dimensional code assigned to the card key to the room of the accommodation facility where the user stays, payment of the price for the product purchased by the user, or payment of the fee for the service used by the user, can be charged to the room where the user stays. In the present case as well, when the shop terminal is set in the charging-to-room mode, and when the two-dimensional code on the card key is scanned with the shop terminal, upon reception of the charging-to-room request from the shop terminal, the amount-of-money input request is sent to the shop terminal, and as a response thereto, the amount-of-money information is received from the shop terminal. Moreover, the room number input request is sent to the shop terminal, and as a response thereto, the room number of the room where the user stays is received from the shop terminal. Then, it is determined whether or not charging to the room where the user stays is possible, by checking the room number received from the shop terminal against the room number of the user acquired from the accommodation reservation management system based on the identification information on the accommodation facility and the accommodation reservation number coded in the two-dimensional code.

According to the present invention, through use of a card key to a room of an accommodation facility, payment of a price for a product purchased by a user of the accommodation facility, or payment of a fee for a service used by the user, can be charged to the room where the user stays.

### (Embodiment)

Hereinafter, the charging-to-room system in an embodiment of the present invention is described with reference to the drawings. The present embodiment illustrates a case of the charging-to-room system that is used for a service system or the like that can be used not only in an accommodation facility (for example, for a room service in a hotel, at a restaurant, a shop, and the like in the hotel), but also in a nearby facility (for example, a restaurant, a shop, and the like around the hotel).

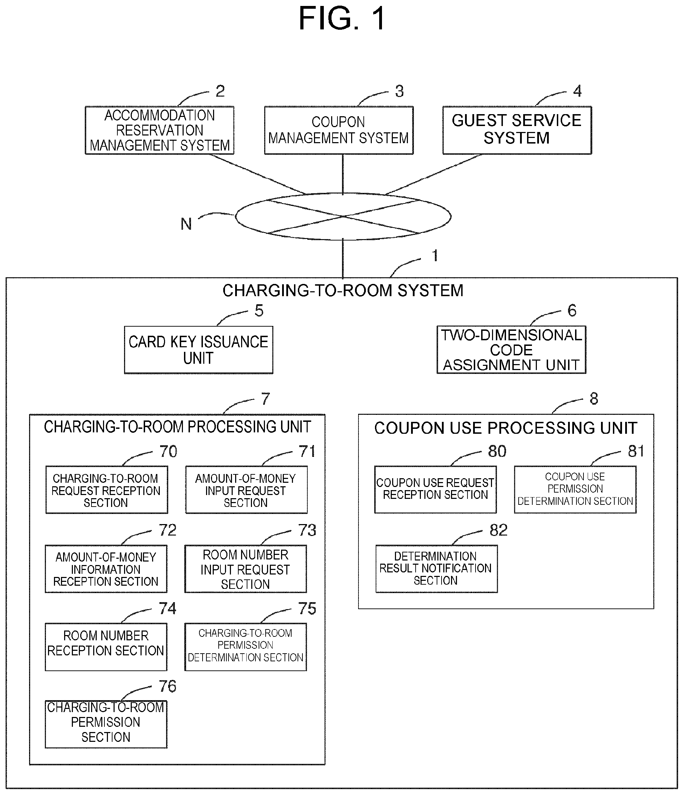

A configuration of the charging-to-room system in the embodiment of the present invention is described with reference to the drawings. Figure 1 is a block diagram showing the configuration of the charging-to-room system in the present embodiment. As shown in Figure 1, the charging-to-room system 1 is connected to an accommodation reservation management system 2, a coupon management system 3, and a guest service system 4 through a network N. The charging-to-room system 1, the accommodation reservation management system 2, the coupon management system 3, and the guest service system 4 each can be configured by using, for example, a server apparatus, a database, and the like.

The accommodation reservation management system 2 includes a function of managing an accommodation reservation, an accommodation price, the number of rooms available, checkout, and the like. For the accommodation reservation management system 2, for example, a hotel management system (PMS: Property Management System) or the like is used. The coupon management system 3 includes a function of managing a coupon (electronic coupon) that can be used in the accommodation facility and the nearby facility. Information related to the coupon, such as a type of the electronic coupon that can be used in the accommodation facility and the nearby facility and an expiration date of the electronic coupon, is registered in a database (coupon DB, which is not depicted) of the coupon management system 3, in association with an accommodation reservation number. Accordingly, it can be checked what type of electronic coupon a guest (user) of interest can use and until when the coupon can be used, by referencing the coupon DB of the coupon management system 3. The guest service system 4 includes a function of providing various services to a guest (user) via a dedicated website or the like. In the present embodiment, the services for users are provided on two types of websites of a main domain and a subdomain.

The charging-to-room system 1 includes a card key issuance unit 5, a two-dimensional code assignment unit 6, a charging-to-room processing unit 7, and a coupon use processing unit 8. The card key issuance unit 5 includes a function of issuing a card key to a room of the accommodation facility where a user stays, based on accommodation plan information on the user acquired from the accommodation reservation management system 2. The two-dimensional code assignment unit 6 includes a function of assigning the card key a two-dimensional code in which access information (URL of the main domain) for the user to access a first service processing unit 40 of the guest service system 4, identification information (hotel code) on the accommodation facility included in the accommodation plan information, an accommodation reservation number, a version (the number of times the card key is reissued), a sub-number (assigned when a plurality of card keys of the same room is issued), and the like are coded. In the present embodiment, the URL of the main domain is coded as text data, and the hotel code, the accommodation reservation number, the version, and the sub-number are coded as hash values. For the two-dimensional code on the card key, for example, a QR code(R) or the like is used.

The two-dimensional code assignment unit 6 can include different processing functions, depending on whether or not data can be linked between the accommodation reservation management system 2 and the guest service system 4, and depending on whether or not the card key issuance unit 5 and the two-dimensional code assignment unit 6 are unified.

For example, when data is not linked between the accommodation reservation management system 2 and the guest service system 4, and when the card key issuance unit 5 and the two-dimensional code assignment unit 6 are not unified, the two-dimensional code assignment unit 6 includes a function of performing a process of, when staff of the accommodation facility inputs a room number of the user by using an accommodation facility terminal H installed in the accommodation facility, acquiring the hotel code and the accommodation reservation number of the user from the accommodation reservation management system 2, a process of acquiring the access information for the user from the guest service system 4 based on the hotel code and the accommodation reservation number acquired from the accommodation reservation management system 2, and a process of assigning the hotel code and the accommodation reservation number acquired from the accommodation reservation management system 2 and the access information acquired from the guest service system 4 to the card key.

When data is linked between the accommodation reservation management system 2 and the guest service system 4, and when the card key issuance unit 5 and the two-dimensional code assignment unit 6 are not unified, the two-dimensional code assignment unit 6 includes a function of performing a process of acquiring the hotel code and the accommodation reservation number included in the accommodation plan information from the accommodation reservation management system 2, a process of acquiring the access information for the user from the guest service system 4 based on the hotel code and the accommodation reservation number included in the accommodation plan information, and a process of assigning the hotel code and the accommodation reservation number acquired from the accommodation reservation management system 2 and the access information acquired from the guest service system 4 to the card key.

When data is linked between the accommodation reservation management system 2 and the guest service system 4, and when the card key issuance unit 5 and the two-dimensional code assignment unit 6 are unified, the two-dimensional code assignment unit 6 includes a function of performing a process of acquiring the hotel code and the accommodation reservation number included in the accommodation plan information from the accommodation reservation management system 2, a process of acquiring the access information for the user from the guest service system 4 based on the hotel code and the accommodation reservation number included in the accommodation plan information, and a process of, when issuing the card key of the user based on the accommodation plan information on the user acquired from the accommodation reservation management system 2, assigning the hotel code and the accommodation reservation number acquired from the accommodation reservation management system 2 and the access information acquired from the guest service system 4 to the card key.

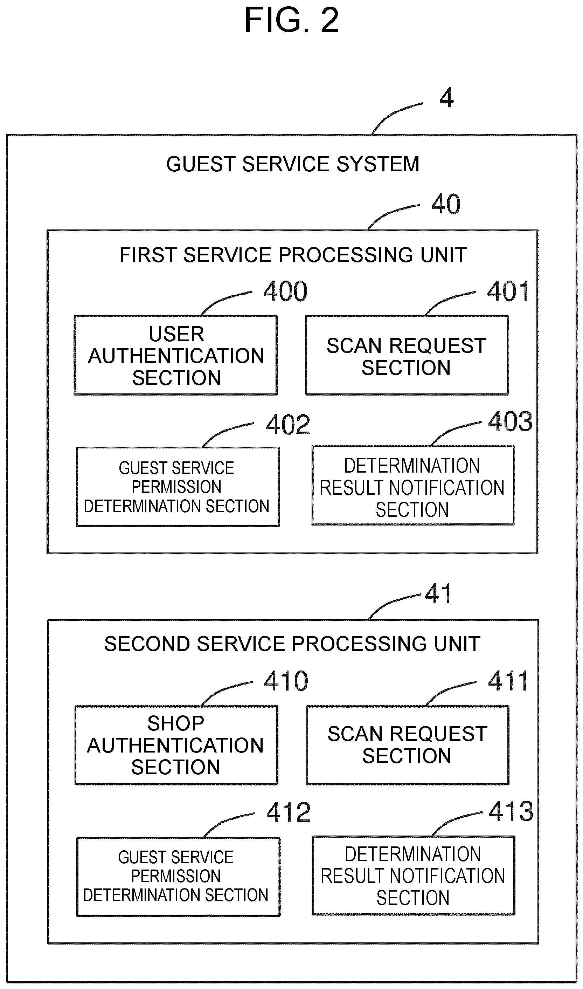

Here, a configuration of the guest service system 4 is described with reference to Figure 2. Figure 2 is a block diagram showing the configuration of the guest service system 4 in the present embodiment. As shown in Figure 2, the guest service system 4 includes the first service processing unit 40 for providing various services to users on the main domain website, and a second service processing unit 41 for providing various services to users on the subdomain website.

In the present embodiment, each shop (including a shop around the hotel, in addition to a shop in the hotel) is provided with a two-dimensional code (second two-dimensional code) in which access information (URL of the subdomain) for a user to access the second service processing unit 41 of the guest service system 4, and identification information (shop code) on the shop are coded. The URL of the subdomain is coded as text data, and the shop code is coded as a hash value. For the two-dimensional code in the shop, for example, a QR code(R) or the like is used.

When the two-dimensional code on the card key is scanned first with a user terminal U owned by the user, the various services on the main domain website are provided to the user, and when the two-dimensional code in the shop is scanned first with the user terminal U owned by the user, the various services on the subdomain website are provided to the user, which will be described later. Here, the first service processing unit 40 corresponds to the guest service system 4 in the present invention, and the second service processing unit 41 corresponds to a second guest service system 4 in the present invention.

The first service processing unit 40 includes a user authentication section 400, a scan request section 401, a guest service permission determination section 402, and a determination result notification section 403. The user authentication section 400 includes a function of: when the two-dimensional code on the card key is scanned first with the user terminal U owned by the user, accepting access from the user terminal U based on the access information (URL of the main domain) coded in the two-dimensional code; and performing an authentication process for the user based on the hotel code and the reservation number coded in the two-dimensional code. The scan request section 401 includes a function of, when the authentication process for the user succeeds, sending to the user terminal U a scan request that causes the two-dimensional code in the shop to be scanned next.

The guest service permission determination section 402 includes a function of, when the two-dimensional code in the shop is scanned with the user terminal U that has received the scan request from the scan request section 401 of the first service processing unit 40, determining, based on the shop code coded in the two-dimensional code in the shop, whether or not payment of a price for a product purchased by the user or payment of a fee for a service used by the user at the shop can be charged to the room where the user stays, or whether or not a coupon can be used at the shop. The determination result notification section 403 includes a function of notifying a result of the determination by the guest service permission determination section 402 of the first service processing unit 40 to the user terminal U.

The second service processing unit 41 includes a shop authentication section 410, a scan request section 411, a guest service permission determination section 412, and a determination result notification section 413. The shop authentication section 410 includes a function of: when the two-dimensional code in the shop is scanned first with the user terminal U owned by the user, accepting access from the user terminal U based on the access information (URL of the subdomain) coded in the two-dimensional code in the shop; and performing an authentication process for the shop based on the shop code coded in the two-dimensional code in the shop. The scan request section 411 includes a function of, when the authentication process for the shop succeeds, sending to the user terminal U a scan request that causes the two-dimensional code on the card key of the user to be scanned next.

The guest service permission determination section 412 includes a function of: when the two-dimensional code on the card key is scanned with the user terminal U that has received the scan request from the scan request section 411 of the second service processing unit 41, determining, based on the hotel code and the reservation number coded in the two-dimensional code on the card key, whether or not payment of a price for a product purchased by the user or payment of a fee for a service used by the user at the shop can be charged to the room where the user stays, or whether or not a coupon can be used at the shop. The determination result notification section 413 includes a function of notifying a result of the determination by the guest service permission determination section 412 of the second service processing unit 41 to the user terminal U.

Referring back to Figure 1, a description of the configuration of the charging-to-room system 1 is continued. The charging-to-room processing unit 7 includes a function of performing a charging-to-room process for charging, through use of the two-dimensional code on the card key, payment of a price for a product purchased by the user, or payment of a fee for a service used by the user, to the room where the user stays. More specifically, the charging-to-room processing unit 7 includes, as functional blocks, a charging-to-room request reception section 70, an amount-of-money input request section 71, an amount-of-money information reception section 72, a room number input request section 73, a room number reception section 74, a charging-to-room permission determination section 75, and a charging-to-room permission section 76.

The charging-to-room request reception section 70 includes a function of, when a shop terminal S installed in a shop that sells the product or a shop that provides the service is set in a charging-to-room mode and when the two-dimensional code on the card key is scanned with the shop terminal S, receiving, from the shop terminal S, a charging-to-room request including the hotel code and the accommodation reservation number coded in the two-dimensional code. Note that the charging-to-room mode is set, for example, when "charge to the room" is selected in a function selection screen on the shop terminal S. In whichever case where the two-dimensional code on the card key is scanned with the shop terminal S that is set in the charging-to-room mode, or where the shop terminal S is set into the charging-to-room mode after the two-dimensional code on the card key is scanned, the charging-to-room request is sent from the shop terminal S to the charging-to-room system 1.

The amount-of-money input request section 71 includes a function of sending, to the shop terminal S as a response to the charging-to-room request, an amount-of-money input request requesting that an amount of money corresponding to the price for the product or the fee for the service be inputted. The amount-of-money information reception section 72 includes a function of receiving from the shop terminal S, as a response to the amount-of-money input request, amount-of-money information on the price for the product or the fee for the service inputted by staff of the shop through use of the shop terminal S.

The room number input request section 73 includes a function of sending to the shop terminal S a room number input request requesting that the room number of the room where the user stays be inputted. The room number reception section 74 includes a function of receiving from the shop terminal S, as a response to the room number input, the room number of the room where the user stays inputted by the user through use of the shop terminal S.

The charging-to-room permission determination section 75 includes a function of determining whether or not charging to the room where the user stays is possible, by checking the room number received from the shop terminal S against the room number of the user acquired from the accommodation reservation management system 2 based on the hotel code and the accommodation reservation number coded in the two-dimensional code. The charging-to-room permission section 76 includes a function of, when it is determined that charging to the room is possible, permitting the price for the product purchased by the user, or the fee for the service used by the user, to be charged to the room where the user stays.

The coupon use processing unit 8 includes a function of performing a coupon use process for allowing the user to use a coupon through use of the two-dimensional code on the card key. More specifically, the coupon use processing unit 8 includes, as functional blocks, a coupon use request reception section 80, a coupon use permission determination section 81, and a determination result notification section 82.

The coupon use request reception section 80 includes a function of, when a shop terminal S installed in a shop where the user desires to use a coupon (electronic coupon) is set in a coupon use mode and when the two-dimensional code on the card key is scanned with the shop terminal S, receiving, from the shop terminal S, a coupon use request including the hotel code and the accommodation reservation number coded in the two-dimensional code. Note that the coupon use mode is set, for example, when "use a coupon" is selected in the function selection screen on the shop terminal S. In whichever case where the two-dimensional code on the card key is scanned with the shop terminal S that is set in the coupon use mode, or where the shop terminal S is set into the coupon use mode after the two-dimensional code on the card key is scanned, the coupon use request is sent from the shop terminal S to the charging-to-room system 1.

The coupon use permission determination section 81 includes a function of determining whether or not the coupon of the user can be used at the shop, by referencing the coupon DB of the coupon management system 3 based on the hotel code and the accommodation reservation number coded in the two-dimensional code. The determination result notification section 82 includes a function of notifying the shop terminal S, as a response to the coupon use request, of a result of the determination of whether or not the coupon of the user can be used at the shop.

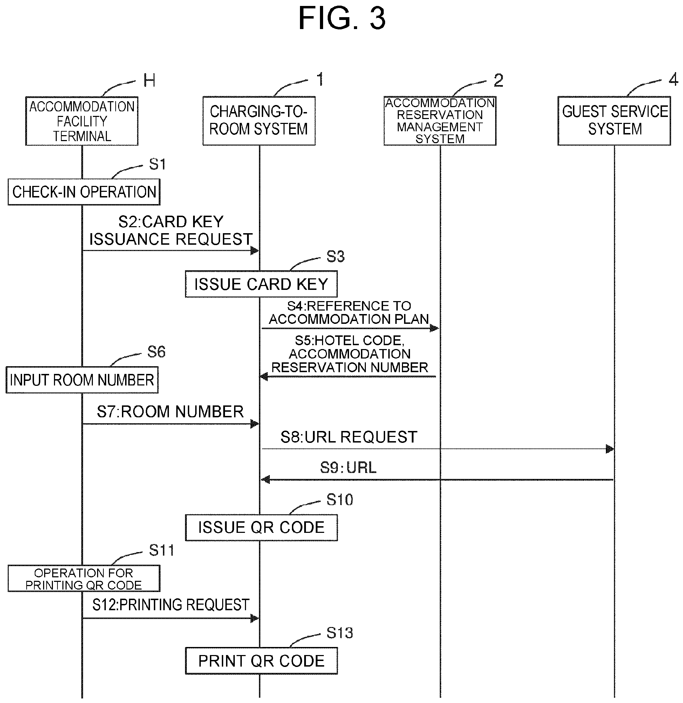

Regarding the charging-to-room system 1 thus configured, operation thereof is described with reference to flowcharts in Figures 3 to 11.

Figure 3 is a flowchart that describes operation at a time of issuing a card key, in the charging-to-room system 1 in the present embodiment. In an example in Figure 3, data is not linked between the accommodation reservation management system 2 and the guest service system 4, and the card key issuance unit 5 and the two-dimensional code assignment unit 6 of the charging-to-room system 1 are not unified.

In such a case, as shown in Figure 3, when a check-in operation is performed on the accommodation facility terminal H (S1), a card key issuance request is sent from the accommodation facility terminal H to the charging-to-room system 1 (S2), and the charging-to-room system 1 issues a card key (S3). The charging-to-room system 1 references the accommodation plan information in the accommodation reservation management system 2 (S4), and receives the hotel code and the accommodation reservation number from the accommodation reservation management system 2 (S5).

Next, at the accommodation facility terminal **H,** when the room number of the room where the user stays is inputted (S6), the inputted room number is sent to the charging-to-room system 1 (S7). The charging-to-room system 1 requests access information (URL of the main domain) from the guest service system 4 (S8), receives the access information (URL of the main domain) from the guest service system 4 (S9), and issues a two-dimensional code (QR code) in which the access information (URL of the main domain), the hotel code, and the like are coded (S10).

At the accommodation facility terminal H, when an operation for printing the QR code is performed (S11), a printing request is sent from the accommodation facility terminal H to the charging-to-room system 1 (S12), and the charging-to-room system 1 prints the two-dimensional code (QR code) on the card key (S13).

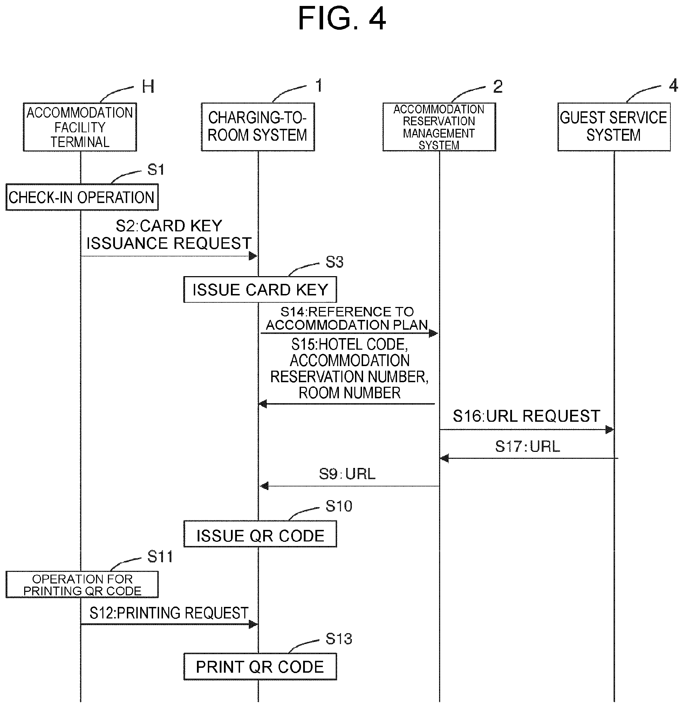

Figure 4 is a flowchart that describes operation at a time of issuing a card key (another example), in the charging-to-room system 1 in the present embodiment. In an example in Figure 4, data is linked between the accommodation reservation management system 2 and the guest service system 4, and the card key issuance unit 5 and the two-dimensional code assignment unit 6 of the charging-to-room system 1 are not unified.

As shown in Figure 4, when a check-in operation is performed on the accommodation facility terminal H (S1), a card key issuance request is sent from the accommodation facility terminal H to the charging-to-room system 1 (S2), and the charging-to-room system 1 issues a card key (S3). In the present case, the charging-to-room system 1 references the accommodation plan information in the accommodation reservation management system 2 (S14), and receives the hotel code, the accommodation reservation number, and the room number from the accommodation reservation management system 2 (S15). Next, the accommodation reservation management system 2 requests access information (URL of the main domain) from the guest service system 4 (S16), and receives the access information (URL of the main domain) from the guest service system 4 (S17). The charging-to-room system 1 receives the access information (URL of the main domain) from the accommodation reservation management system 2 (S9), and issues a two-dimensional code (QR code) in which the access information (URL of the main domain), the hotel code, and the like are coded (S10).

At the accommodation facility terminal H, when an operation for printing the QR code is performed (S11), a printing request is sent from the accommodation facility terminal H to the charging-to-room system 1 (S12), and the charging-to-room system 1 prints the two-dimensional code (QR code) on the card key (S13).

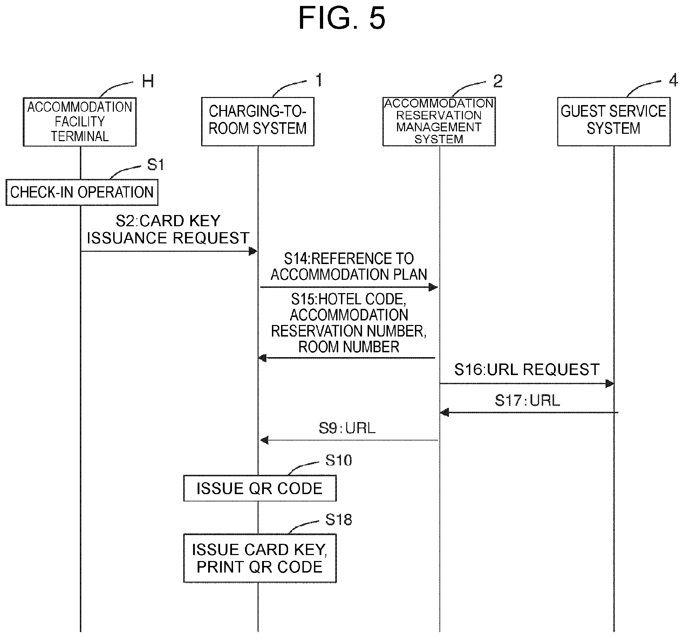

Figure 5 is a flowchart that describes operation at a time of issuing a card key (another example), in the charging-to-room system 1 in the present embodiment. In an example in Figure 5, data is linked between the accommodation reservation management system 2 and the guest service system 4, and the card key issuance unit 5 and the two-dimensional code assignment unit 6 of the charging-to-room system 1 are unified.

As shown in Figure 5, when a check-in operation is performed on the accommodation facility terminal H (S1), a card key issuance request is sent from the

accommodation facility terminal H to the charging-to-room system 1 (S2), and the charging-to-room system 1 issues a card key (S3). In the present case, the charging-to-room system 1 references the accommodation plan information in the accommodation reservation management system 2 (S14),

and receives the hotel code, the accommodation reservation number, and the room number from the accommodation reservation management system 2 (S15). Next, the accommodation reservation management system 2 requests access information (URL of the main domain) from the guest service system 4 (S16), and receives the access information (URL of the main domain) from the guest service system 4 (S17). The charging-to-room system 1 receives the access information (URL of the main domain) from the accommodation reservation management system 2 (S9), and issues a two-dimensional code (QR code) in which the access information (URL of the main domain), the hotel code, and the like are coded (S10). Then, the charging-to-room system 1 prints the two-dimensional code (QR code) on the card key (S18).

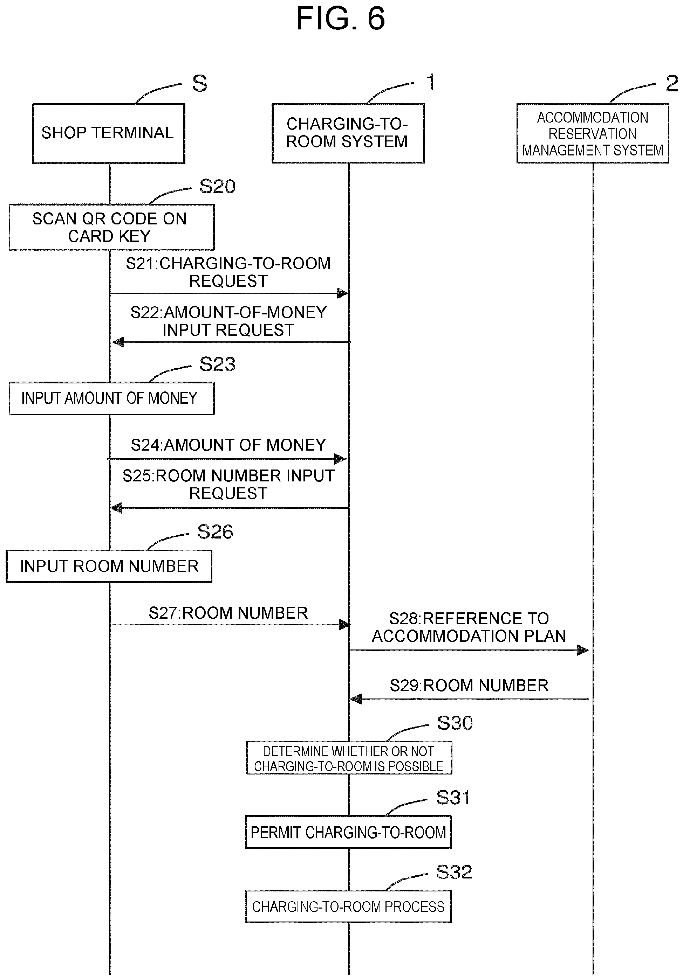

Figure 6 is a flowchart that describes operation at a time of charging to a room through use of a shop terminal S, in the charging-to-room system 1 in the present embodiment. In a case where a price for a product purchased by the user, or a fee for a service used by the user, is charged to the room where the user stays, as shown in Figure 6, when the two-dimensional code on the card key is scanned with the shop terminal S that is set in the "charging-to-room mode" (S20), a charging-to-room request is sent from the shop terminal S to the charging-to-room system 1 (S21). When the charging-to-room system 1 sends an amount-of-money input request to the shop terminal S as a response to the charging-to-room request (S22), then at the shop terminal S, an amount of money to be charged to the room (an amount of money corresponding to the price for the product purchased by the user or the fee for the service used by the user) is inputted (S23), and amount-of-money information is sent from the shop terminal S to the charging-to-room system 1 (S24).

Next, when the charging-to-room system 1 sends a room number input request to the shop terminal S (S25), then at the shop terminal S, a room number (the room number of the room to which a charge will be made) is inputted by the user (S26), and the room number is sent from the shop terminal S to the charging-to-room system 1 (S27). The charging-to-room system 1 references the accommodation plan information in the accommodation reservation management system 2 (S28), and receives the room number of the user (the room number of the room where the user stays) from the accommodation reservation management system 2 (S29).

The charging-to-room system 1 determines whether or not charging to the room where the user stays is possible, by checking the room number received from the shop terminal S against the room number received from the accommodation reservation management system 2 (S30). For example, when the room number received from the shop terminal S and the room number received from the accommodation reservation management system 2 coincide, it is determined that charging to the room where the user stays is possible. When the room number received from the shop terminal S and the room number received from the accommodation reservation management system 2 do not coincide, it is determined that charging to the room where the user stays is not possible.

When it is determined that charging to the room where the user stays is possible, the charging-to-room system 1 permits the price for the product purchased by the user or the fee for the service used by the user to be charged to the room where the user stays (S31), and performs the charging-to-room process (S32).

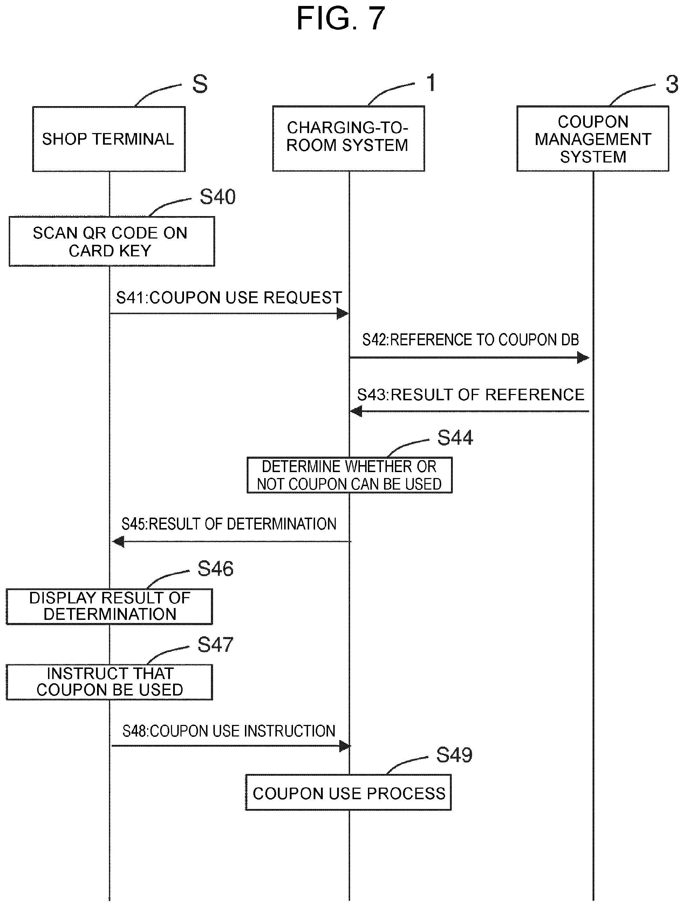

Figure 7 is a flowchart that describes operation at a time a coupon is used through use of a shop terminal S, in the charging-to-room system 1 in the present embodiment. In a case where the user uses a coupon (electronic coupon), as shown in Figure 7, when the two-dimensional code on the card key is scanned with the shop terminal S that is set in a "coupon use mode" (S40), a coupon use request is sent from the shop terminal S to the charging-to-room system 1 (S41). The charging-to-room system 1 references the coupon DB of the coupon management system 3 (S42), and when a result of the reference is received from the coupon management system 3 (S43), determines, based on the result of the reference, whether or not the coupon (electronic coupon) can be used at the shop (S44).

A result of the determination is sent from the charging-to-room system 1 to the shop terminal S (S45), and is displayed in a screen on the shop terminal S (S46). In a case where the coupon (electronic coupon) can be used at the shop, when an operation for instructing that the coupon be used is performed on the shop terminal S (S47), a coupon use instruction is sent from the shop terminal S to the charging-to-room system 1 (S48), and the coupon use process is performed (S49).

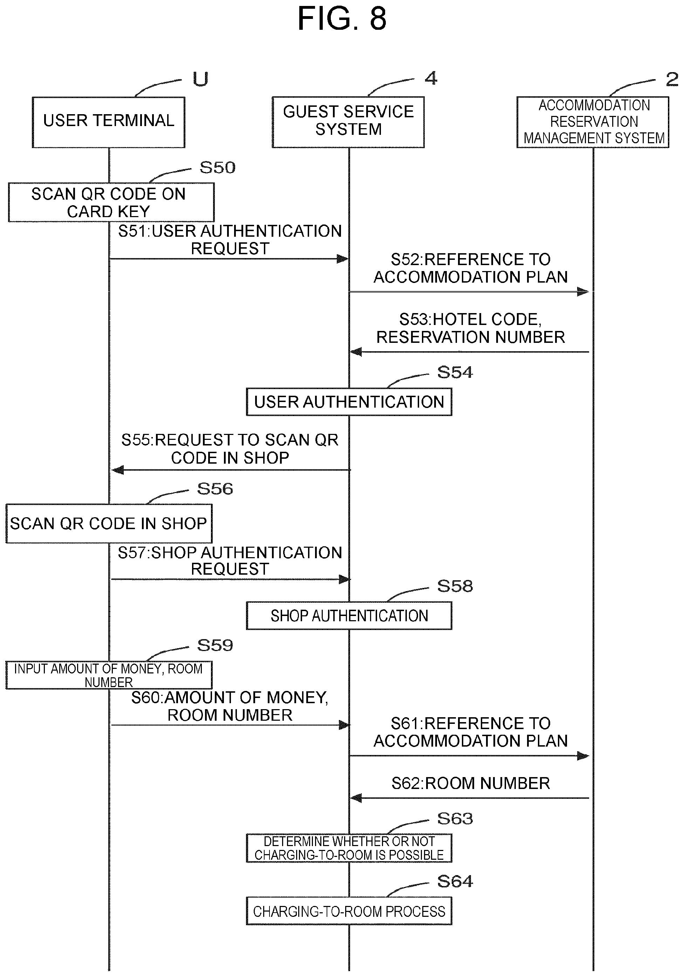

Figure 8 is a flowchart that describes operation at a time of charging to a room through use of the user terminal U (in a case where the QR code on the card key is scanned first), in the charging-to-room system 1 in the present embodiment. As shown in Figure 8, for example, when the two-dimensional code on the card key is scanned with the user terminal U that is set in the "charging-to-room mode" (S50), the user terminal U accesses the main domain website of the guest service system 4, and at the same time, a user authentication request (including the hotel code and the accommodation reservation information coded in the two-dimensional code on the card key) is sent from the user terminal U to the guest service system 4 (S51). The guest service system 4 references the accommodation plan information in the accommodation reservation management system 2 (S52), and receives the hotel code and the accommodation reservation number from the accommodation reservation management system 2 (S53).

The guest service system 4 performs user authentication by checking the hotel code and the accommodation reservation number received from the user terminal U against the hotel code and the accommodation reservation number received from the accommodation reservation management system 2 (S54). For example, when the hotel code and the accommodation reservation number received from the user terminal U coincide with the hotel code and the accommodation reservation number received from the accommodation reservation management system 2, the authentication process for the user succeeds. When the hotel code and the accommodation reservation number received from the user terminal U do not coincide with the hotel code and the accommodation reservation number received from the accommodation reservation management system 2, the authentication process for the user fails.

When the authentication process for the user succeeds, the guest service system 4 sends to the user terminal U a scan request that causes the two-dimensional code in the shop to be scanned (S55). When the two-dimensional code in the shop is scanned with the user terminal U (S56), a shop authentication request (including the shop code coded in the two-dimensional code in the shop) is sent from the user terminal U to the guest service system 4 (S57). The guest service system 4 performs shop authentication, based on the shop code included in the shop authentication request (S58). For example, when the shop code included in the shop authentication request coincides with the shop code of the existent shop, the authentication process for the shop succeeds. When the shop code included in the shop authentication request does not coincide with the shop code of the existent shop, the authentication process for the shop fails.

When an amount of money to be charged to the room (an amount of money corresponding to a price for a product purchased by the user or a fee for a service used by the user) and a room number (the room number of the room to which a charge will be made) are inputted on the user terminal U (S59), the amount of money and the room number are sent from the user terminal U to the guest service system 4 (S60). The guest service system 4 references the accommodation plan information in the accommodation reservation management system 2 (S61), and receives the room number of the user (the room number of the room where the user stays) from the accommodation reservation management system 2 (S62).

The guest service system 4 determines whether or not charging to the room where the user stays is possible, by checking the room number received from the user terminal U against the room number received from the accommodation reservation management system 2 (S63). For example, when the room number received from the user terminal U coincides with the room number received from the accommodation reservation management system 2, it is determined that charging to the room where the user stays is possible. When the room number received from the user terminal U does not coincide with the room number received from the accommodation reservation management system 2, it is determined that charging to the room where the user stays is not possible. When it is determined that charging to the room where the user stays is possible, the charging-to-room process is performed (S64).

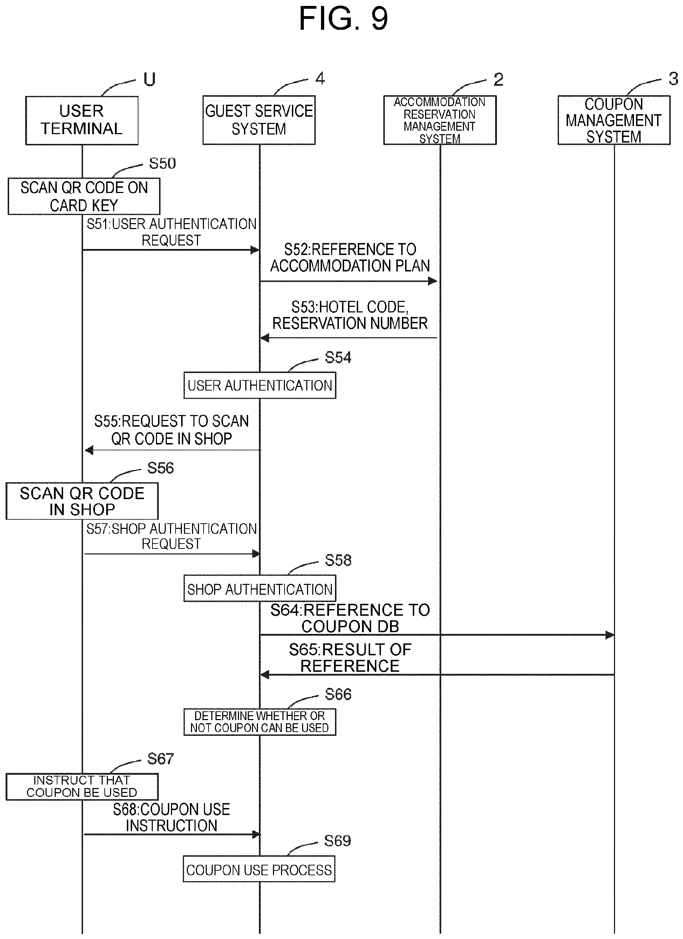

Figure 9 is a flowchart that describes operation at a time a coupon is used through use of the user terminal U (in a case where the QR code on the card key is scanned first), in the charging-to-room system 1 in the present embodiment. As shown in Figure 9, for example, when the two-dimensional code on the card key is scanned with the user terminal U that is set in the "coupon use mode" (S50), the user terminal U accesses the main domain website of the guest service system 4, and at the same time, a user authentication request (including the hotel code and the accommodation reservation information coded in the two-dimensional code on the card key) is sent from the user terminal U to the guest service system 4 (S51). The guest service system 4 references the accommodation plan information in the accommodation reservation management system 2 (S52), and receives the hotel code and the accommodation reservation number from the accommodation reservation management system 2 (S53).

The guest service system 4 performs user authentication by checking the hotel code and the accommodation reservation number received from the user terminal U against the hotel code and the accommodation reservation number received from the accommodation reservation management system 2 (S54). For example, when the hotel code and the accommodation reservation number received from the user terminal U coincide with the hotel code and the accommodation reservation number received from the accommodation reservation management system 2, the authentication process for the user succeeds. When the hotel code and the accommodation reservation number received from the user terminal U do not coincide with the hotel code and the accommodation reservation number received from the accommodation reservation management system 2, the authentication process for the user fails.

When the authentication process for the user succeeds, the guest service system 4 sends to the user terminal U a scan request that causes the two-dimensional code in the shop to be scanned (S55). When the two-dimensional code in the shop is scanned with the user terminal U (S56), a shop authentication request (including the shop code coded in the two-dimensional code in the shop) is sent from the user terminal U to the guest service system 4 (S57). The guest service system 4 performs shop authentication, based on the shop code included in the shop authentication request (S58). For example, when the shop code included in the shop authentication request coincides with the shop code of the existent shop, the authentication process for the shop succeeds. When the shop code included in the shop authentication request does not coincide with the shop code of the existent shop, the authentication process for the shop fails.

When the authentication process for the shop succeeds, the guest service system 4 references the coupon DB of the coupon management system 3 (S64), and when a result of the reference is received from the coupon management system 3 (S65), determines, based on the result of the reference, whether or not the coupon (electronic coupon) can be used at the shop (S66).

A result of the determination is displayed in a screen on the user terminal U. In a case where the coupon (electronic coupon) can be used at the shop, when an operation for instructing that the coupon be used is performed on the user terminal U (S67), a coupon use instruction is sent from the shop terminal S to the charging-to-room system 1 (S68), and the coupon use process is performed (S69).

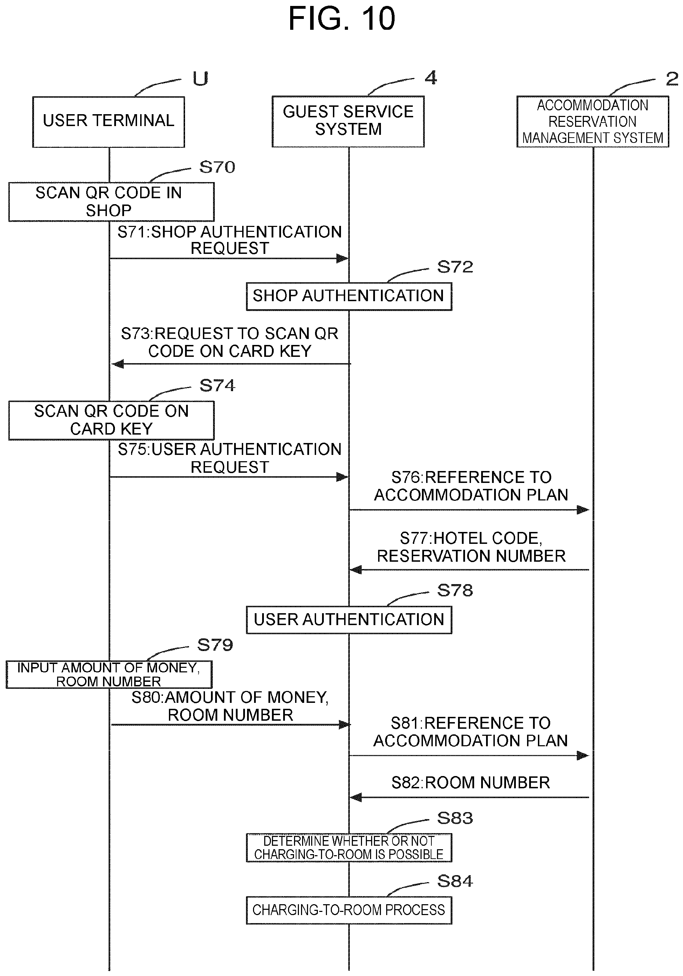

Figure 10 is a flowchart that describes operation at a time of charging to a room through use of the user terminal U (in a case where the QR code in a shop is scanned first), in the charging-to-room system 1 in the present embodiment. As shown in Figure 10, for example, when the two-dimensional code in the shop is scanned with the user terminal U that is set in the "charging-to-room mode" (S70), the user terminal U accesses the subdomain website of the guest service system 4, and at the same time, a shop authentication request (including the shop code coded in the two-dimensional code in the shop) is sent from the user terminal U to the guest service system 4 (S71). The guest service system 4 performs shop authentication, based on the shop code included in the shop authentication request (S72). For example, when the shop code included in the shop authentication request coincides with the shop code of the existent shop, the authentication process for the shop succeeds. When the shop code included in the shop authentication request does not coincide with the shop code of the existent shop, the authentication process for the shop fails.

When the authentication process for the shop succeeds, the guest service system 4 sends to the user terminal U a scan request that causes the two-dimensional code on the card key to be scanned (S73). When the two-dimensional code on the card key is scanned with the user terminal U (S74), a user authentication request (including the hotel code and the accommodation reservation information coded in the two-dimensional code on the card key) is sent from the user terminal U to the guest service system 4 (S75). The guest service system 4 references the accommodation plan information in the accommodation reservation management system 2 (S76), and receives the hotel code and the accommodation reservation number from the accommodation reservation management system 2 (S77).

The guest service system 4 performs user authentication by checking the hotel code and the accommodation reservation number received from the user terminal U against the hotel code and the accommodation reservation number received from the accommodation reservation management system 2 (S78). For example, when the hotel code and the accommodation reservation number received from the user terminal U coincide with the hotel code and the accommodation reservation number received from the accommodation reservation management system **2,** the authentication process for the user succeeds. When the hotel code and the accommodation reservation number received from the user terminal U do not coincide with the hotel code and the accommodation reservation number received from the accommodation reservation management system 2, the authentication process for the user fails.

When an amount of money to be charged to the room (an amount of money corresponding to a price for a product purchased by the user or a fee for a service used by the user) and a room number (the room number of the room to which a charge will be made) are inputted on the user terminal U (S79), the amount of money and the room number are sent from the user terminal U to the guest service system 4 (S80). The guest service system 4 references the accommodation plan information in the accommodation reservation management system 2 (S81), and receives the room number of the user (the room number of the room where the user stays) from the accommodation reservation management system 2 (S82).

The guest service system 4 determines whether or not charging to the room where the user stays is possible, by checking the room number received from the user terminal U against the room number received from the accommodation reservation management system 2 (S83). For example, when the room number received from the user terminal U coincides with the room number received from the accommodation reservation management system 2, it is determined that charging to the room where the user stays is possible. When the room number received from the user terminal U does not coincide with the room number received from the accommodation reservation management system 2, it is determined that charging to the room where the user stays is not possible. When it is determined that charging to the room where the user stays is possible, the charging-to-room process is performed (S84).

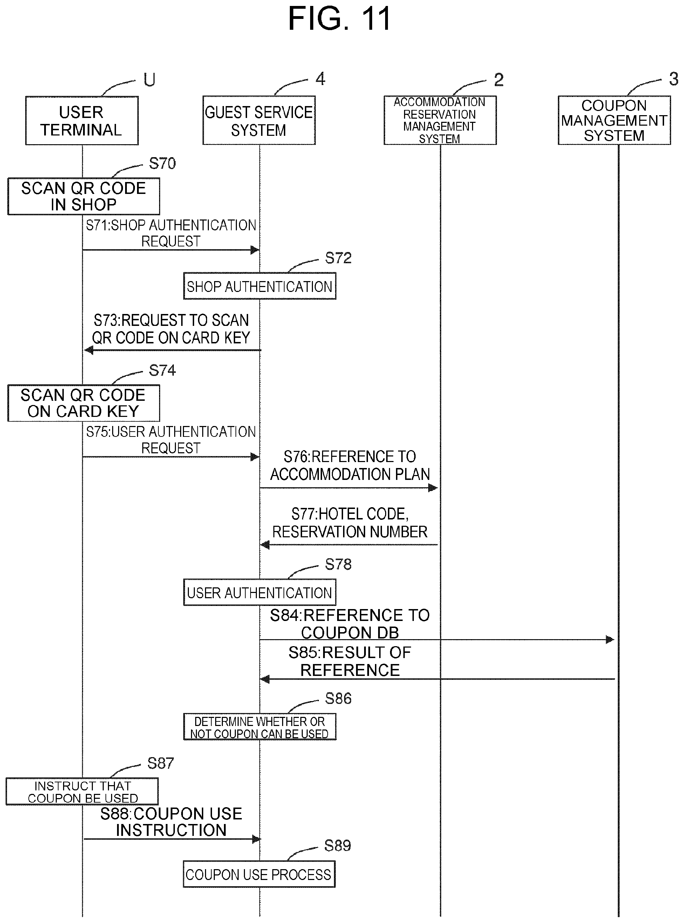

Figure 11 is a flowchart that describes operation at a time a coupon is used through use of the user terminal U (in a case where the QR code in a shop is scanned first), in the charging-to-room system 1 in the present embodiment. As shown in Figure 11, for example, when the two-dimensional code in the shop is scanned with the user terminal U that is set in the "coupon use mode" (S70), the user terminal U accesses the subdomain website of the guest service system 4, and at the same time, a shop authentication request (including the shop code coded in the two-dimensional code in the shop) is sent from the user terminal U to the guest service system 4 (S71). The guest service system 4 performs shop authentication, based on the shop code included in the shop authentication request (S72). For example, when the shop code included in the shop authentication request coincides with the shop code of the existent shop, the authentication process for the shop succeeds. When the shop code included in the shop authentication request does not coincide with the shop code of the existent shop, the authentication process for the shop fails.

When the authentication process for the shop succeeds, the guest service system 4 sends to the user terminal U a scan request that causes the two-dimensional code on the card key to be scanned (S73). When the two-dimensional code on the card key is scanned with the user terminal U (S74), a user authentication request (including the hotel code and the accommodation reservation information coded in the two-dimensional code on the card key) is sent from the user terminal U to the guest service system 4 (S75). The guest service system 4 references the accommodation plan information in the accommodation reservation management system 2 (S76), and receives the hotel code and the accommodation reservation number from the accommodation reservation management system 2 (S77).

The guest service system 4 performs user authentication by checking the hotel code and the accommodation reservation number received from the user terminal U against the hotel code and the accommodation reservation number received from the accommodation reservation management system 2 (S78). For example, when the hotel code and the accommodation reservation number received from the user terminal U coincide with the hotel code and the accommodation reservation number received from the accommodation reservation management system 2, the authentication process for the user succeeds. When the hotel code and the accommodation reservation number received from the user terminal U do not coincide with the hotel code and the accommodation reservation number received from the accommodation reservation management system 2, the authentication process for the user fails.

When the authentication process for the user succeeds, the guest service system 4 references the coupon DB of the coupon management system 3 (S84), and when a result of the reference is received from the coupon management system 3 (S85), determines, based on the result of the reference, whether or not the coupon (electronic coupon) can be used at the shop (S86).

A result of the determination is displayed in a screen on the user terminal U. In a case where the coupon (electronic coupon) can be used at the shop, when an operation for instructing that the coupon be used is performed on the user terminal U (S87), a coupon use instruction is sent from the shop terminal S to the charging-to-room system 1 (S88), and the coupon use process is performed (S89).

According to the charging-to-room system 1 in the present embodiment as described above, through use of a card key to a room of an accommodation facility, payment of a price for a product purchased by a user of the accommodation facility, or payment of a fee for a service used by the user, can be charged to the room where the user stays.

In other words, in the present embodiment, through use of a two-dimensional code assigned to a card key to a room of an accommodation facility where a user stays, payment of a price for a product purchased by the user, or payment of a fee for a service used by the user, can be charged to the room where the user stays. In such a case, as shown in Figure 6, when a shop terminal S is set in the charging-to-room mode, and when the two-dimensional code on the card key is scanned with the shop terminal S, upon reception of a charging-to-room request from the shop terminal S, an amount-of-money input request is sent to the shop terminal S, and as a response thereto, amount-of-money information is received from the shop terminal S. Moreover, a room number input request is sent to the shop terminal S, and as a response thereto, the room number of the room where the user stays is received from the shop terminal S. Then, it is determined whether or not charging to the room where the user stays is possible, by checking the room number received from the shop terminal S against the room number of the user acquired from the accommodation reservation management system 2 based on the hotel code and the accommodation reservation number coded in the two-dimensional code.

Moreover, in the present embodiment, the user can use a coupon through use of the two-dimensional code assigned to the card key to the room of the accommodation facility where the user stays. In such a case, as shown in Figure 7, when a shop terminal S is set in the coupon use mode, and when the two-dimensional code on the card key is scanned with the shop terminal S, upon reception of a coupon use request from the shop terminal S, the coupon management system 3 is referenced based on the hotel code and the accommodation reservation number coded in the two-dimensional code, and it is determined whether or not the coupon of the user can be used at the shop.

In the present embodiment, in a case where data is not linked between the accommodation reservation management system 2 and the guest service system 4, and the card key issuance unit 5 and the two-dimensional code assignment unit 6 are not unified, as shown in Figure 3, when the room number of the user is inputted through use of the accommodation facility terminal H, the hotel code and the accommodation reservation number of the user can be acquired from the accommodation reservation management system 2, and the access information for the user can be acquired from the guest service system 4 based on the hotel code and the accommodation reservation number. Thus, the two-dimensional code in which the access information for the user to access the guest service system 4 is coded can be assigned to the card key in three steps.

In the present embodiment, in a case where data is linked between the accommodation reservation management system 2 and the guest service system 4, and the card key issuance unit 5 and the two-dimensional code assignment unit 6 are not unified, as shown in Figure 4, the hotel code and the accommodation reservation number included in the accommodation plan information can be acquired from the accommodation reservation management system 2, and the access information for the user can be acquired from the guest service system 4 based on the hotel code and the accommodation reservation number. Thus, the two-dimensional code in which the access information for the user to access the guest service system 4 is coded can be assigned to the card key in two steps.

In the present embodiment, in a case where data is linked between the accommodation reservation management system 2 and the guest service system 4, and the card key issuance unit 5 and the two-dimensional code assignment unit 6 are unified, as shown in Figure 5, the hotel code and the accommodation reservation number included in the accommodation plan information can be acquired from the accommodation reservation management system 2, and the access information for the user can be acquired from the guest service system 4 based on the hotel code and the accommodation reservation number. Moreover, in such a case, since the two-dimensional code assignment unit 6 is unified with the card key issuance unit 5, the hotel code and the accommodation reservation number acquired from the accommodation reservation management system 2 and the access information acquired from the guest service system 4 can be assigned to the card key when the card key of the user is issued. Thus, the two-dimensional code in which the access information for the user to access the guest service system 4 is coded can be assigned to the card key in one step.

In the present embodiment, as shown in Figure 8 or Figure 9, when the two-dimensional code on the card key of the user is scanned first with the user terminal U, the authentication process for the user is performed by using the hotel code and the reservation number coded in the two-dimensional code on the card key, and when the authentication process for the user succeeds, a scan request that causes the two-dimensional code in a shop to be scanned next is sent to the user terminal U. When the two-dimensional code in the shop is scanned with the user terminal U, it is determined, based on the shop code coded in the two-dimensional code in the shop, whether or not payment of a price for a product purchased by the user or payment of a fee for a service used by the user at the shop can be charged to the room where the user stays, or whether or not a coupon can be used at the shop. Thus, payment of the price for the product purchased by the user or payment of the fee for the service used by the user can be charged to the room where the user stays.

In the present embodiment, as shown in Figure 10 or Figure 11, when the two-dimensional code in a shop is scanned first with the user terminal U, the authentication process for the shop is performed based on the shop code coded in the two-dimensional code in the shop, and when the authentication process for the shop succeeds, a scan request that causes the two-dimensional code on the card key of the user to be scanned next is sent to the user terminal U. When the two-dimensional code on the card key of the user is scanned with the user terminal U, it is determined, based on the hotel code and the reservation number coded in the two-dimensional code on the card key, whether or not payment of a price for a product purchased by the user or payment of a fee for a service used by the user at the shop can be charged to the room where the user stays, or whether or not a coupon can be used at the shop. Thus, payment of the price for the product purchased by the user or payment of the fee for the service used by the user can be charged to the room where the user stays.

Although an embodiment of the present invention has been described by using illustrative examples hereinabove, the scope of the present invention is not limited thereto, and changes and modifications can be made according to purposes within the scope of claims.

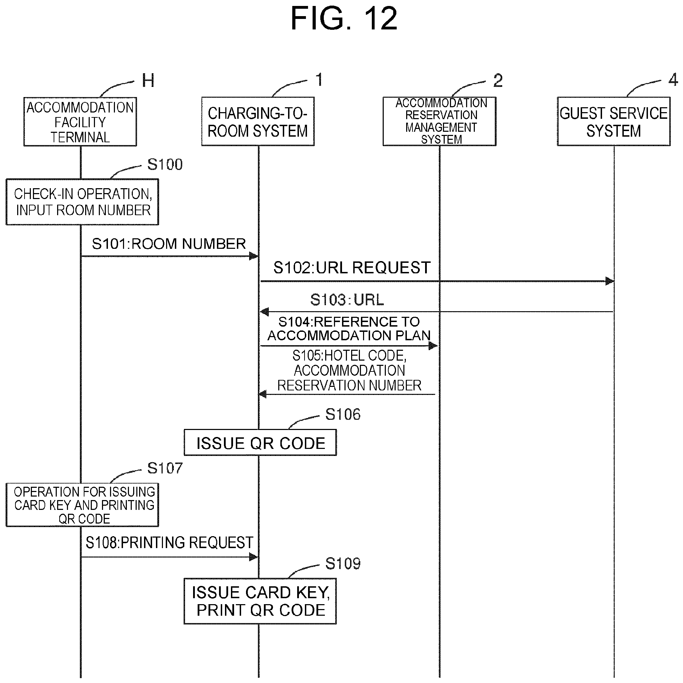

Figure 12 is a flowchart that describes operation at a time of issuing a card key (another example), in the charging-to-room system 1 in the present embodiment. In an example in Figure 12, data is not linked between the accommodation reservation management system 2 and the guest service system 4, and the card key issuance unit 5 and the two-dimensional code assignment unit 6 of the charging-to-room system 1 are unified.

As shown in Figure 12, when a check-in operation and an operation of inputting a room number are performed on the accommodation facility terminal H (S100), the room number is sent from the accommodation facility terminal H to the charging-to-room system 1 (S101). In the present case, the charging-to-room system 1 requests access information (URL of the main domain) from the guest service system 4 (S102), and receives the access information (URL of the main domain) from the guest service system 4 (S103). The charging-to-room system 1 references the accommodation plan information in the accommodation reservation management system 2 (S104), receives the hotel code, the accommodation reservation number, and the room number from the accommodation reservation management system 2 (S105), and issues a two-dimensional code (QR code) in which the access information (URL of the main domain), the hotel code, and the like are coded (S106).

Next, when an operation for issuing a card key and printing a QR code is performed on the accommodation facility terminal H (S107), a card key issuance and QR code printing request is sent from the accommodation facility terminal H to the charging-to-room system 1 (S108), the charging-to-room system 1 issues a card key and, at the same time, prints a two-dimensional code (QR code) on the issued card key (S109).

In the case where data is not linked between the accommodation reservation management system 2 and the guest service system 4, and the card key issuance unit 5 and the two-dimensional code assignment unit 6 are unified as described above, as shown in Figure 12, the access information for the user can be acquired from the guest service system 4, and the hotel code and the accommodation reservation number included in the accommodation plan information can be acquired from the accommodation reservation management system 2. Moreover, in the present case, since the two-dimensional code assignment unit 6 is unified with the card key issuance unit 5, the hotel code and the accommodation reservation number acquired from the accommodation reservation management system 2 and the access information acquired from the guest service system 4 can be assigned to the card key when the card key of the user is issued. Thus, the two-dimensional code in which the access information for the user to access the guest service system 4 is coded can be assigned to the card key in two steps.

Although an embodiment of the present invention that is considered to be preferred at the present time has been described hereinabove, it is to be understood that various modifications can be made to the present embodiment, and it is intended that the accompanying claims include all of such modifications falling within the true spirit and the scope of the present invention.

### Industrial Applicability

As described above, the charging-to-room system according to the present invention has an advantageous effect that, through use of a card key to a room of an accommodation facility, payment of a price for a product purchased by a user of the accommodation facility, or payment of a fee for a service used by the user, can be charged to the room where the user stays, and is useful as a service system or the like that can be used not only in the accommodation facility but also in a nearby facility.

### Reference Signs List

1 Charging-to-room system
2 Accommodation reservation management system
3 Coupon management system
4 Guest service system
5 Card key issuance unit
6 Two-dimensional code assignment unit
7 Charging-to-room processing unit
8 Coupon use processing unit
40 First service processing unit (guest service system)
400 User authentication section
401 Scan request section
402 Guest service permission determination section
403 Determination result notification section
41 Second service processing unit (second guest service system)
410 Shop authentication section
411 Scan request section
412 Guest service permission determination section
413 Determination result notification section
70 Charging-to-room request reception section
71 Amount-of-money input request section
72 Amount-of-money information reception section
73 Room number input request section
74 Room number reception section
75 Charging-to-room permission determination section
76 Charging-to-room permission section
80 Coupon use request reception section
81 Coupon use permission determination section
82 Determination result notification section
N Network
H Accommodation facility terminal
U User terminal
S Shop terminal

## Claims

1. A charging-to-room system comprising:
a card key issuance unit that issues a card key to a room of an accommodation facility where a user stays, based on accommodation plan information on the user acquired from an accommodation reservation management system;
a two-dimensional code assignment unit that assigns the card key a two-dimensional code in which identification information on the accommodation facility and an accommodation reservation number included in the accommodation plan information are coded; and
a charging-to-room processing unit that performs a charging-to-room process for charging, through use of the two-dimensional code on the card key, payment of a price for a product purchased by the user, or payment of a fee for a service used by the user, to the room where the user stays,
wherein the charging-to-room processing unit includes
a charging-to-room request reception section that, when a shop terminal installed in a shop that sells the product or a shop that provides the service is set in a charging-to-room mode, and when the two-dimensional code on the card key is scanned with the shop terminal, receives a charging-to-room request from the shop terminal, the charging-to-room request including the identification information on the accommodation facility and the accommodation reservation number coded in the two-dimensional code,
an amount-of-money input request section that sends, to the shop terminal as a response to the charging-to-room request, an amount-of-money input request requesting that an amount of money corresponding to the price for the product or the fee for the service be inputted,
an amount-of-money information reception section that receives from the shop terminal, as a response to the amount-of-money input request, amount-of-money information on the price for the product or the fee for the service inputted by staff of the shop through use of the shop terminal,
a room number input request section that sends to the shop terminal a room number input request requesting that a room number of the room where the user stays be inputted,
a room number reception section that receives from the shop terminal, as a response to the room number input, the room number of the room where the user stays inputted by the user through use of the shop terminal,
a charging-to-room permission determination section that determines whether or not charging to the room where the user stays is possible, by checking the room number received from the shop terminal against a room number of the user acquired from the accommodation reservation management system based on the identification information on the accommodation facility and the accommodation reservation number coded in the two-dimensional code, and
a charging-to-room permission section that, when it is determined that charging to the room is possible, permits the price for the product purchased by the user or the fee for the service used by the user to be charged to the room where the user stays.

2. The charging-to-room system according to claim 1, wherein the accommodation reservation number is associated with information related to a coupon that the user is able to use in a coupon management system, the charging-to-room system further comprising a coupon use processing unit that performs a coupon use process for allowing the user to use the coupon through use of the two-dimensional code on the card key,
wherein the coupon use processing unit includes
a coupon use request reception section that, when a shop terminal installed in a shop where the user desires to use the coupon is set in a coupon use mode, and when the two-dimensional code on the card key is scanned with the shop terminal, receives a coupon use request from the shop terminal, the coupon use request including the identification information on the accommodation facility and the accommodation reservation number coded in the two-dimensional code,
a coupon use permission determination section that determines whether or not it is possible to use the coupon of the user at the shop, by referencing the coupon management system based on the identification information on the accommodation facility and the accommodation reservation number coded in the two-dimensional code, and
a determination result notification section that notifies the shop terminal, as a response to the coupon use request, of a result of the determination of whether or not it is possible to use the coupon of the user at the shop.

3. The charging-to-room system according to claim 1 or 2, wherein
access information for the user to access a guest service system is coded in the two-dimensional code, and
the two-dimensional code assignment unit performs
when staff of the accommodation facility inputs the room number of the user through use of an accommodation facility terminal installed in the accommodation facility, a process of acquiring the identification information on the accommodation facility and the accommodation reservation number of the user from the accommodation reservation management system,
a process of acquiring the access information for the user from the guest service system, based on the identification information on the accommodation facility and the accommodation reservation number acquired from the accommodation reservation management system, and
a process of assigning the identification information on the accommodation facility and the accommodation reservation number acquired from the accommodation reservation management system and the access information acquired from the guest service system to the card key.

4. The charging-to-room system according to claim 1 or 2, wherein
access information for the user to access a guest service system is coded in the two-dimensional code, and
the two-dimensional code assignment unit performs
a process of acquiring the identification information on the accommodation facility and the accommodation reservation number included in the accommodation plan information from the accommodation reservation management system,
a process of acquiring the access information for the user from the guest service system, based on the identification information on the accommodation facility and the accommodation reservation number included in the accommodation plan information, and
a process of assigning the identification information on the accommodation facility and the accommodation reservation number acquired from the accommodation reservation management system and the access information acquired from the guest service system to the card key.

5. The charging-to-room system according to claim 1 or 2, wherein
access information for the user to access a guest service system is coded in the two-dimensional code,
the two-dimensional code assignment unit is unified with the card key issuance unit, and
the card key issuance unit performs
a process of acquiring the identification information on the accommodation facility and the accommodation reservation number included in the accommodation plan information from the accommodation reservation management system,
a process of acquiring the access information for the user from the guest service system, based on the identification information on the accommodation facility and the accommodation reservation number included in the accommodation plan information, and
a process of, when issuing the card key of the user based on the accommodation plan information on the user acquired from the accommodation reservation management system, assigning the identification information on the accommodation facility and the accommodation reservation number acquired from the accommodation reservation management system and the access information acquired from the guest service system to the card key.

6. The charging-to-room system according to claim 1 or 2, wherein
access information for the user to access a guest service system is coded in the two-dimensional code,
the two-dimensional code assignment unit is unified with the card key issuance unit, and
the card key issuance unit performs
a process of acquiring the access information for the user from the guest service system,
a process of acquiring the identification information on the accommodation facility and the accommodation reservation number included in the accommodation plan information from the accommodation reservation management system, and
a process of, when issuing the card key of the user, assigning the identification information on the accommodation facility and the accommodation reservation number acquired from the accommodation reservation management system and the access information acquired from the guest service system to the card key.

7. The charging-to-room system according to claim 1 or 2, wherein
access information for the user to access a guest service system is coded in the two-dimensional code,
a second two-dimensional code in which identification information on the shop is coded is provided in the shop, and
the guest service system includes
a user authentication section that, when the two-dimensional code is scanned with a user terminal owned by the user, accepts access from the user terminal based on the access information coded in the two-dimensional code, and performs an authentication process for the user based on the identification information on the accommodation facility and the accommodation reservation number coded in the two-dimensional code,
a scan request section that, when the authentication process for the user succeeds, sends to the user terminal a scan request that causes the second two-dimensional code in the shop to be scanned,
a guest service permission determination section that, when the second two-dimensional code is scanned with the user terminal, determines, based on the identification information on the shop coded in the second two-dimensional code, whether or not it is possible to charge payment of the price for the product purchased by the user at the shop, or payment of the fee for the service used by the user at the shop, to the room where the user stays, or whether or not it is possible to use a coupon at the shop, and
a determination result notification section that notifies a result of the determination by the guest service permission determination section to the user terminal.

8. The charging-to-room system according to claim 1 or 2, wherein
a second two-dimensional code in which identification information on the shop and second access information for the user to access a second guest service system are coded is provided in the shop, and
the second guest service system includes
a shop authentication section that, when the second two-dimensional code is scanned with a user terminal owned by the user, accepts access from the user terminal based on the second access information coded in the second two-dimensional code, and performs an authentication process for the shop based on the identification information on the shop coded in the second two-dimensional code,
a scan request section that, when the authentication process for the shop succeeds, sends to the user terminal a scan request that causes the two-dimensional code on the card key of the user to be scanned,
a guest service permission determination section that, when the two-dimensional code is scanned with the user terminal, determines, based on the identification information on the accommodation facility and the accommodation reservation number coded in the two-dimensional code, whether or not it is possible to charge payment of the price for the product purchased by the user at the shop, or payment of the fee for the service used by the user at the shop, to the room where the user stays, or whether or not it is possible to use a coupon at the shop, and
a determination result notification section that notifies a result of the determination by the guest service permission determination section to the user terminal.

9. A method executed by a charging-to-room system, the charging-to-room system including
a card key issuance unit that issues a card key to a room of an accommodation facility where a user stays, based on accommodation plan information on the user acquired from an accommodation reservation management system,
a two-dimensional code assignment unit that assigns the card key a two-dimensional code in which identification information on the accommodation facility and an accommodation reservation number included in the accommodation plan information are coded, and
a charging-to-room processing unit that performs a charging-to-room process for charging, through use of the two-dimensional code on the card key, payment of a price for a product purchased by the user, or payment of a fee for a service used by the user, to the room where the user stays,
the method comprising:
when the two-dimensional code on the card key is scanned with a shop terminal installed in a shop that sells the product or a shop that provides the service when the shop terminal is set in a charging-to-room mode, receiving a charging-to-room request from the shop terminal, the charging-to-room request including the identification information on the accommodation facility and the accommodation reservation number coded in the two-dimensional code;
sending, to the shop terminal as a response to the charging-to-room request, an amount-of-money input request requesting that an amount of money corresponding to the price for the product or the fee for the service be inputted;
receiving from the shop terminal, as a response to the amount-of-money input request, amount-of-money information on the price for the product or the fee for the service inputted by staff of the shop through use of the shop terminal;
sending to the shop terminal a room number input request requesting that a room number of the room where the user stays be inputted;
receiving from the shop terminal, as a response to the room number input, the room number of the room where the user stays inputted by the user through use of the shop terminal;
determining whether or not charging to the room where the user stays is possible, by checking the room number received from the shop terminal against a room number of the user acquired from the accommodation reservation management system based on the identification information on the accommodation facility and the accommodation reservation number coded in the two-dimensional code; and
when it is determined that charging to the room is possible, permitting the price for the product purchased by the user or the fee for the service used by the user to be charged to the room where the user stays.
